# EUROPEAN PATENT APPLICATION

(11) **EP 4 422 325 A1**
(43) Date of publication of application: **28.08.2024**
(21) Application number: 21960846.0
(22) Date of filing: 18.10.2021
(51) Int. Cl.: H04W 74/00

(54) **METHOD AND APPARATUS FOR DETERMINING DETECTION BEAM OF UNLICENSED UPLINK CHANNEL, AND MEDIUM**

(71) Applicant: Beijing Xiaomi Mobile Software Co., Ltd., Beijing 100085 (CN)
(72) Inventor: FU, Ting, Beijing 100085 (CN)
(74) Representative: Stöckeler, Ferdinand
(86) International application number: PCT/CN2021/124499
(87) International publication number: WO 2023/065085

(57) **Abstract**

Provided in the present disclosure are a method and apparatus for determining a detection beam of an unlicensed uplink channel, and a medium, which are applied to the technical field of wireless communications. The method comprises: receiving first beam configuration information or second beam configuration information, wherein the first beam configuration information is used for indicating a sending beam for sending an unlicensed uplink channel, and the second beam configuration information is used for indicating a detection beam for executing LBT detection on the unlicensed uplink channel; on the basis of the first beam configuration information or the second beam configuration information, determining the detection beam for executing LBT detection on the unlicensed uplink channel; and executing LBT detection on the unlicensed uplink channel on the basis of the determined detection beam. In the embodiments of the present disclosure, a user equipment can determine a rational detection beam without a network device indicating related information of a detection beam, thereby saving on transmission resources, or the user equipment can accurately determine the detection beam according to an indication of the network device.

## Description

### TECHNICAL FIELD

The disclosure relates to the field of wireless communication technologies, in particular to methods for determining a detection beam for an unlicensed uplink channel, related apparatuses and readable storage media.

### BACKGROUND

On unlicensed spectrum, before occupying a channel to send data, a transmitter generally needs to monitor the channel, i.e., performing clear channel assessment (CCA). When the transmitter determines that the channel is idle after performing the CCA, the transmitter may occupy the channel to send data, otherwise the transmitter cannot occupy the channel. This channel is generally called unlicensed uplink channel, and the above process is generally called a listen before talk (LBT) channel access mechanism on the unlicensed spectrum.

Omni-directional LBT or directional LBT may be performed on the unlicensed uplink channel. The omni-directional LBT is to perform the LBT using an omnidirectional beam, and the directional LBT is to perform the LBT using a certain directional beam. How to determine the corresponding detection beam (i.e., the beam used for performing the LBT) in directional LBT is a problem to be solved.

### SUMMARY

In view of this, the disclosure provides methods for determining a detection beam for an unlicensed uplink channel, related apparatuses and readable storage media.

According to a first aspect of embodiments of the disclosure, a method for determining a detection beam for an unlicensed uplink channel, performed by a user equipment (UE), is provided. The method includes:
receiving first beam configuration information from a network device, in which the first beam configuration information is configured to indicate a transmission beam for sending the unlicensed uplink channel; and
determining, based on the first beam configuration information, a detection beam for performing a listen before talk (LBT) detection on the unlicensed uplink channel.

In embodiments of the disclosure, the UE receives the first beam configuration information from a network device to determine the transmission beam for sending the unlicensed uplink channel and determine, based on the transmission beam, the detection beam for performing the LBT detection on the unlicensed uplink channel, so that the UE may determine a proper detection beam without the need for the network device to indicate relevant information of the detection beam, thereby saving transmission resources.

In some possible implementations, the method further includes:
receiving a high-layer signaling from the network device, in which the high-layer signaling includes LBT configuration information, and the LBT configuration information is configured to indicate that a LBT mode is a directional LBT.

In some possible implementations, determining, based on the first beam configuration information, the detection beam for performing the LBT detection on the unlicensed uplink channel includes:
determining, based on the transmission beam indicated by the first beam configuration information and a condition agreed in a protocol, the detection beam for performing the LBT detection on the unlicensed uplink channel, in which the condition agreed in the protocol includes at least one of a first selection condition or a second selection condition.

In some possible implementations, determining, based on the first beam configuration information, the detection beam for performing the LBT detection on the unlicensed uplink channel includes:
determining one or more detection beams based on the transmission beam indicated by the first beam configuration information and a first selection condition agreed in a protocol; and
determining, based on the second selection condition agreed in the protocol, one of the one or more detection beams as the detection beam for performing the LBT detection on the unlicensed uplink channel.

In some possible implementations, the first selection condition at least includes:
the detection beam being the transmission beam;
a coverage direction of the detection beam and a coverage direction of the transmission beam satisfying a preset relation;
   or,
the detection beam being associated with the transmission beam.

In some possible implementations, the second selection condition at least includes:
a beamwidth at a preset attenuation degree being maximum;
   or,
a spatial relation information index being minimum.

In some possible implementations, the detection beam for performing the LBT detection on the unlicensed uplink channel is an omni-directional beam.

According to a second aspect of embodiments of the disclosure, a method for determining a detection beam for an unlicensed uplink channel, performed by a user equipment (UE), is provided. The method includes:
receiving second beam configuration information from a network device, in which the second beam configuration information is configured to indicate the detection beam for performing a listen before talk (LBT) detection on the unlicensed uplink channel; and
determining, based on the second beam configuration information, the detection beam for performing the LBT detection on the unlicensed uplink channel.

In embodiments of the disclosure, the UE receives the second beam configuration information from the network device and determines, based on the second beam configuration information, the detection beam for performing the LBT detection on the unlicensed uplink channel, such that the UE may accurately determine the detection beam based on an indication from the network device.

In some possible implementations, receiving the second beam configuration information from the network device includes:
receiving a high-layer signaling from the network device, in which the high-layer signaling includes the second beam configuration information.

In some possible implementations, the second beam configuration information includes multiple pieces of spatial relation information, and the multiple pieces of spatial relation information correspond to a plurality of uplink beams.

The method further includes:
receiving a Medium Access Control Control Element (MAC CE) signaling from the network device, in which the MAC CE signaling is configured to activate one of the plurality of uplink beams; and
determining the activated beam in the multiple pieces of spatial relation information as the detection beam for performing the LBT detection on the unlicensed uplink channel.

In some possible implementations, receiving the second beam configuration information from the network device includes:
receiving a Radio Resource Control (RRC) signaling from the network device, in which the RRC signaling includes the second beam configuration information;
in which the second beam configuration information is configured to indicate one Sounding Reference Signal (SRS) resource to indicate the detection beam for performing the LBT on the unlicensed uplink channel.

In some possible implementations, the unlicensed uplink channel is a Physical Uplink Control Channel (PUCCH) or a Configured Grant Physical Uplink Shared channel (CG-PUSCH).

In some possible implementations, receiving the second beam configuration information from the network device includes: receiving scheduling downlink control information (DCI) from the network device, in which the scheduling DCI includes the second beam configuration information, and the second beam configuration information is configured to indicate one SRS resource to indicate the detection beam for performing the LBT on the unlicensed uplink channel.

In some possible implementations, the unlicensed uplink channel is a Physical Uplink Shared Channel (PUSCH) or a CG-PUSCH.

In some possible implementations, the method further includes: in response to not receiving the second beam configuration information from the network device, determining a default detection beam for performing the LBT on the unlicensed uplink channel.

In some possible implementations, the default detection beam is a transmission beam for sending the unlicensed uplink channel or an omni-directional beam.

According to a third aspect of embodiments of the disclosure, a method for determining a detection beam for an unlicensed uplink channel, performed by a network device, is provided. The method includes:
sending first beam configuration information to a user equipment (UE), in which the first beam configuration information is configured to indicate a transmission beam for sending the unlicensed uplink channel, to enable the UE to determine, based on the first beam configuration information, the detection beam for performing a listen before talk (LBT) detection on the unlicensed uplink channel.

In embodiments of the disclosure, the network device sends the first beam configuration information to the UE, to enable the UE to determine, based on the first beam configuration information, the transmission beam for sending the unlicensed uplink channel and to determine, based on the transmission beam, the detection beam for performing the LBT detection on the unlicensed uplink channel. Therefore, the UE may determine a proper detection beam without the need for the network device to indicate relevant information of the detection beam, thereby saving transmission resources.

In some possible implementations, the method further includes:
sending a high-layer signaling to the UE, in which the high-layer signaling includes LBT configuration information, and the LBT configuration information indicates that a LBT mode is a directional LBT.

According to a fourth aspect of embodiments of the disclosure, a method for determining a detection beam for an unlicensed uplink channel, performed by a network device, is provided. The method includes:
sending second beam configuration information to a user equipment (UE), in which the second beam configuration information is configured to indicate a detection beam for performing a listen before talk (LBT) detection on the unlicensed uplink channel, to enable the UE to determine, based on the second beam configuration information, the detection beam for performing the LBT detection on the unlicensed uplink channel.

In embodiments of the disclosure, the network device sends the second beam configuration information to the UE, to enable the UE to determine the detection beam for performing the LBT detection on the unlicensed uplink channel. Therefore, the UE may accurately determine the detection beam based on an indication from the network device.

In some possible implementations, sending the second beam configuration information to the UE includes:
sending a high-layer signaling to the UE, in which the high-layer signaling includes the second beam configuration information.

In some possible implementations, the second beam configuration information includes multiple pieces of spatial relation information and the multiple pieces of spatial relation information correspond to a plurality of uplink beams.

The method further includes:
sending a Medium Access Control Control Element (MAC CE) signaling to the UE, in which the MAC CE signaling is configured to activate one of the plurality of uplink beams, to enable the UE to determine the activated beam in the multiple pieces of spatial relation information as the detection beam for performing the LBT detection on the unlicensed uplink channel.

In some possible implementations, sending the second beam configuration information to the UE includes:
sending a Radio Resource Control (RRC) signaling to the UE, in which the RRC signaling includes the second beam configuration information, and
the second beam configuration information is configured to indicate one Sounding Reference Signal (SRS) resource to indicate the detection beam for performing the LBT on the unlicensed uplink channel.

In some possible implementations, sending the second beam configuration information to the UE includes:
sending scheduling downlink control information (DCI) to the UE, in which the scheduling DCI includes the second beam configuration information, and the second beam configuration information is configured to indicate one SRS resource to indicate the detection beam for performing the LBT on the unlicensed uplink channel.

According to a fifth aspect of embodiments of the disclosure, a communication apparatus is provided. The communication apparatus is configured to implement steps performed by the UE in the first aspect described above or in any possible design of the first aspect. The UE may implement each of the functions in above methods in the form of a hardware structure, a software module, or a combination of the hardware structure and the software module.

When the communication apparatus of the fifth aspect is implemented by a software module, the communication apparatus may include a transceiver module and a processing module coupled to each other. The transceiver module is configured to support the communication apparatus in communicating. The processing module may be used by the communication apparatus to perform processing operations, such as, generating information/messages to be sent, or processing received signals to obtain information/messages.

When implementing the steps of the first aspect, the transceiver module is configured to receive first beam configuration information from a network device, in which the first beam configuration information is configured to indicate a transmission beam for sending an unlicensed uplink channel. The processing module is configured to determine, based on the first beam configuration information, a detection beam for performing a listen before talk (LBT) detection on the unlicensed uplink channel.

According to a sixth aspect of embodiments of the disclosure, a communication apparatus is provided. The communication apparatus is configured to implement the steps performed by the UE in the second aspect described above or in any possible design of the second aspect. The UE may implement each of the functions in the above methods in the form of a hardware structure, a software module, or a combination of the hardware structure and the software module.

When the communication apparatus of the sixth aspect is implemented by a software module, the communication apparatus may include a transceiver module and a processing module coupled to each other. The transceiver module is configured to support the communication apparatus in communicating. The processing module may be used by the communication apparatus to perform processing operations, such as, generating information/messages to be sent, or processing received signals to obtain information/messages.

When implementing the steps of the second aspect, the transceiver module is configured to receive second beam configuration information from a network device, in which the second beam configuration information is configured to indicate a detection beam for performing a listen before talk (LBT) detection on the unlicensed uplink channel. The processing module is configured to determine, based on the second beam configuration information, the detection beam for performing the LBT detection on the unlicensed uplink channel.

According to a seventh aspect of embodiments of the disclosure, a communication apparatus is provided. The communication apparatus is configured to implement the steps performed by the network device in the third aspect described above or in any possible design of the third aspect. The network device may implement each of the functions in the above methods in the form of a hardware structure, a software module, or a combination of the hardware structure and the software module.

When the communication apparatus of the seventh aspect is implemented by a software module, the communication apparatus may include a transceiver module and a processing module coupled to each other. The transceiver module is configured to support the communication apparatus in communicating. The processing module may be used by the communication apparatus to perform processing operations, such as, generating information/messages to be sent, or processing received signals to obtain information/messages.

When implementing the steps of the third aspect, the transceiver module is configured to send first beam configuration information to a UE, in which the first beam configuration information is configured to indicate a transmission beam for sending an unlicensed uplink channel, to enable the UE to determine, based on the first beam configuration information, a detection beam for performing a listen before talk (LBT) detection on the unlicensed uplink channel.

According to an eighth aspect of embodiments of the disclosure, a communication apparatus is provided. The communication apparatus is configured to implement the steps performed by the network device in the fourth aspect described above or in any possible design of the fourth aspect. The network device may implement each of the functions in the above methods in the form of a hardware structure, a software module, or a combination of the hardware structure and the software module.

When the communication apparatus of the eighth aspect is implemented by a software module, the communication apparatus may include a transceiver module and a processing module coupled to each other. The transceiver module is configured to support the communication apparatus in communicating. The processing module may be used by the communication apparatus to perform processing operations, such as, generating information/messages to be sent, or processing received signals to obtain information/messages.

When implementing the steps of the fourth aspect, the transceiver module is configured to send second beam configuration information to a UE, in which the second beam configuration information is configured to indicate a detection beam for performing a listen before talk (LBT) detection on an unlicensed uplink channel, to enable the UE to determine, based on the second beam configuration information, the detection beam for performing the LBT detection on the unlicensed uplink channel.

According to a ninth aspect of embodiments of the disclosure, a communication system is provided. The communication system may include the communication apparatus according to the fifth aspect and the communication apparatus according to the seventh aspect. The communication apparatus according to the fifth aspect may be composed of a software module and/or a hardware component. The communication apparatus according to the seventh aspect may be composed of a software module and/or a hardware component.

According to a tenth aspect of embodiments of the disclosure, a communication system is provided. The communication system may include the communication apparatus according to the sixth aspect and the communication apparatus according to the eighth aspect. The communication apparatus according to the sixth aspect may be composed of a software module and/or a hardware component. The communication apparatus according to the eighth aspect may be composed of a software module and/or a hardware component.

According to an eleventh aspect of embodiments of the disclosure, a communication device is provided. The communication device includes a processor and a memory. The memory is configured to store a computer program. The processor is configured to execute the computer program to implement methods of the first aspect or any possible design of the first aspect.

According to a twelfth aspect of embodiments of the disclosure, a communication device is provided. The communication device includes a processor and a memory. The memory is configured to store a computer program. The processor is configured to execute the computer program to implement methods of the second aspect or any possible design of the second aspect.

According to a thirteenth aspect of embodiments of the disclosure, a communication device is provided. The communication device includes a processor and a memory. The memory is configured to store a computer program. The processor is configured to execute the computer program to implement methods of the third aspect or any possible design of the third aspect.

According to a fourteenth aspect of embodiments of the disclosure, a communication device is provided. The communication device includes a processor and a memory. The memory is configured to store a computer program. The processor is configured to execute the computer program to implement methods of the fourth aspect or any possible design of the fourth aspect.

According to a fifteenth aspect of embodiments of the disclosure, a computer-readable storage medium having instructions (computer programs/programs) stored thereon is provided. When the instructions (computer programs/programs) are called and executed by a computer, the computer is caused to implement methods of the first aspect or any possible design of the first aspect.

According to a sixteenth aspect of embodiments of the disclosure, a computer-readable storage medium having instructions (computer programs/programs) stored thereon is provided. When the instructions (computer programs/programs) are called and executed by a computer, the computer is caused to implement methods of the second aspect or any possible design of the second aspect.

According to a seventeenth aspect of embodiments of the disclosure, a computer-readable storage medium having instructions (computer programs/programs) stored thereon is provided. When the instructions (computer programs/programs) are called and executed by a computer, the computer is caused to implement methods of the third aspect or any possible design of the third aspect.

According to an eighteenth aspect of embodiments of the disclosure, a computer-readable storage medium having instructions (computer programs/programs) stored thereon is provided. When the instructions (computer programs/programs) are called and executed by a computer, the computer is caused to implement methods of the fourth aspect or any possible design of the fourth aspect.

For the beneficial effects in the above second to eighteenth aspects and their possible designs, reference may be made to the description of the beneficial effects of methods in the first aspect and any possible design of the first aspect.

It is understandable that the above general description and the following detailed description are illustrative and explanatory only, and do not limit the disclosure.

### BRIEF DESCRIPTION OF THE DRAWINGS

The accompanying drawings illustrated herein are used to provide a further understanding of embodiments of the disclosure and constitute a part of the application, and the schematic embodiments of the disclosure and illustrations thereof are used to explain embodiments of the disclosure and do not constitute an undue limitation of embodiments of the disclosure.

The accompanying drawings, which are incorporated in and constitute a part of this specification, illustrate embodiments consistent with the disclosure and, together with the description, serve to explain principles of embodiments of the disclosure.
FIG. 1 is a schematic diagram illustrating a communication system according to an embodiment.
FIG. 2 is a flowchart illustrating a method for determining a detection beam for an unlicensed uplink channel according to an embodiment.
FIG. 3 is a flowchart illustrating a method for determining a detection beam for an unlicensed uplink channel according to an embodiment.
FIG. 4 is a flowchart illustrating a method for determining a detection beam for an unlicensed uplink channel according to an embodiment.
FIG. 5 is a flowchart illustrating a method for determining a detection beam for an unlicensed uplink channel according to an embodiment.
FIG. 6 is a flowchart illustrating a method for determining a detection beam for an unlicensed uplink channel according to an embodiment.
FIG. 7 is a schematic diagram illustrating an apparatus for determining a detection beam for an unlicensed uplink channel according to an embodiment.
FIG. 8 is a schematic diagram illustrating a device for determining a detection beam for an unlicensed uplink channel according to an embodiment.
FIG. 9 is a schematic diagram illustrating an apparatus for determining a detection beam for an unlicensed uplink channel according to an embodiment.
FIG. 10 is a schematic diagram illustrating a device for determining a detection beam for an unlicensed uplink channel according to an embodiment.

### DETAILED DESCRIPTION

Embodiments of the disclosure will be further described with reference to the accompanying drawings and specific implementations.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all possible implementations consistent with the disclosure. Instead, they are merely examples of apparatuses and methods consistent with aspects related to the disclosure as recited in the appended claims.

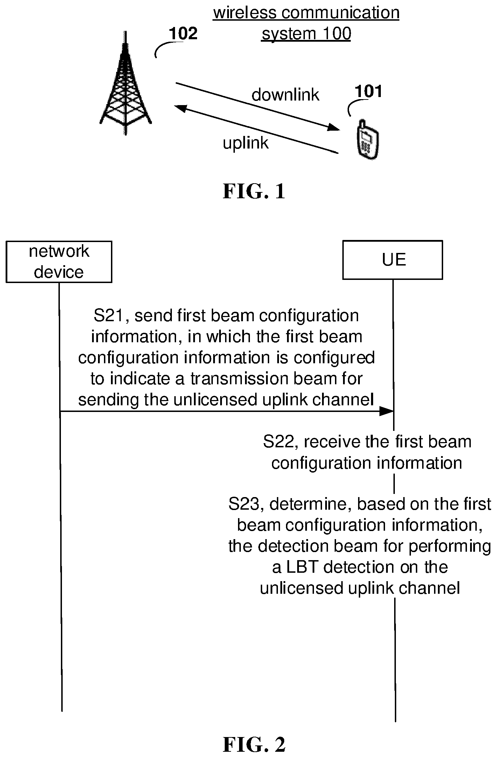

FIG. 1 is a schematic diagram illustrating a communication system according to an embodiment. The method for determining a detection beam for an unlicensed uplink channel according to embodiments of the disclosure may be applied to a wireless communication system 100. The wireless communication system 100 may include a user equipment (UE) 101 and a network device 102. The UE 101 is configured to support carrier aggregation. The UE 101 may be connected to multiple component carriers of the network device 102, including a primary component carrier and one or more secondary component carriers.

It is understandable that the above wireless communication system 100 may be applied to the low-frequency scenarios and the high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The UE 101 shown above may be a terminal, an access terminal, a terminal unit, a terminal station, a mobile station (MS), a distant station, a remote terminal, a mobile terminal, a wireless communication device, a terminal agent, or a user device. The UE 101 may have a wireless transceiver function, which is capable of communicating (e.g., wirelessly communicating) with one or more network devices in one or more communication systems and accepting network services provided by the network devices. The network devices herein include, but are not limited to, the network device 102.

The UE 101 may be a cellular phone, a cordless phone, a session initiation protocol (SIP) phone, a wireless local loop (WLL) station, a personal digital assistant (PDA), a handheld device having wireless communication functions, a computing device or other processing devices connected to a wireless modem, vehicle-mounted devices, wearable devices, UEs in a future 5G network or UEs in a future evolved PLMN network, etc.

The network device 102 may be an access network device (or access network site). The access network device refers to a device that provides network access functions, such as a radio access network (RAN) base station. The network device 102 may specifically include a base station (BS), or include a BS and a radio resource management device for controlling the BS. The network device 102 may also include a relay station (relay device an access point, a BS in the future 5G network a BS in the future evolved PLMN network or a NR BS. The network device 102 may be a wearable device or an in-vehicle device. The network device 102 may also be a communication chip containing a communication module.

For example, the network device 102 includes, but is not limited to, a next generation 5G BS (gNB, which is short for gnodeB), an evolved node B (eNB) in an LTE system, a radio network controller (RNC), a node B (NB) in a wideband code division multiple access (WCDMA) system, a wireless controller under a CRAN system, a BS controller (BSC), a BS transceiver station (BTS) in a Global Mobile Communication System (GSM) system or a Code Division Multiple Access (CDMA) system, a home BS (HNB, which is short for home evolved node B or home node B), a baseband unit (BBU), a transmitting and receiving point (TRP), a transmitting point (TP), or a mobile switching center.

The method for determining a detection beam for an unlicensed uplink channel according to embodiments of the disclosure may be applied to the wireless communication system 100. FIG. 2 is a flowchart illustrating a method for determining a detection beam for an unlicensed uplink channel according to an embodiment. As illustrated in FIG. 2, the method includes the following.

At block S21, the network device 102 sends first beam configuration information to the UE 101.

At block S22, the UE 101 receives the first beam configuration information sent by the network device 102.

At block S23, the UE 101 determines, based on the first beam configuration information, the detection beam for performing a listen before talk (LBT) detection on the unlicensed uplink channel.

In some examples, the method further includes a block S24 where in response to determining the detection beam for performing the LBT detection on the unlicensed uplink channel, the UE 101 performs the LBT detection on the unlicensed uplink channel based on the determined detection beam.

The first beam configuration information is configured to indicate transmission beam(s) for sending the unlicensed uplink channel.

The detection beam used for performing the LBT detection on the unlicensed uplink channel is a detection beam for performing a directional LBT detection on the unlicensed uplink channel.

In some possible implementations, the method for determining a detection beam for an unlicensed uplink channel is applied to an unlicensed frequency band of NR 52.6 GHz to 71 GHz.

The following examples are provided for explanation.

### Example 1

For a Physical Uplink Control Channel (PUCCH), the UE may receive a high-layer signaling from the network device. The high-layer signaling includes the first beam configuration information. The first beam configuration information includes a plurality of pieces of spatial relation information (spatialrelationinfo) and the plurality of pieces of spatial relation information correspond to a plurality of transmission beams used for sending the unlicensed uplink channel, i.e., the plurality of pieces of spatialrelationinfo are used to indicate Sounding Reference Signal (SRS) transmission beams.

The sounding reference signal (SRS) may also be called an uplink reference signal. Main functions of SRS include acquisition of uplink channel state information, acquisition of downlink channel state information and beam management.

The UE also needs to receive a Medium Access Control Control Element (MAC CE) signaling from the network device. The MAC CE signaling is used for activating one of the plurality of transmission beams used for sending the unlicensed uplink channel, and the activated beam is used as a transmission beam for sending the PUCCH.

### Example 2

For a Configured Grant Physical Uplink Shared Channel (CG-PUSCH), the UE receives a Radio Resource Control (RRC) signaling from the network device. The RRC signaling includes the first beam configuration information. The first beam configuration information indicates an SRS resource to implicitly indicate the transmission beam corresponding to the CG-PUSCH.

### Example 3

For a dynamically scheduled Physical Uplink Shared Channel (PUSCH), the UE receives scheduling downlink control information (DCI) from the network device. The scheduling DCI includes the first beam configuration information. The first beam configuration information is configured to indicate one SRS resource to implicitly indicate the transmission beam corresponding to the PUSCH.

In embodiments of the disclosure, the network device sends the first beam configuration information to the UE, to enable the UE to determine, based on the first beam configuration information, the detection beam for performing the LBT detection on the unlicensed uplink channel. Therefore, the UE may determine a proper detection beam without the need for the network device to indicate relevant information of the detection beam, thereby saving transmission resources.

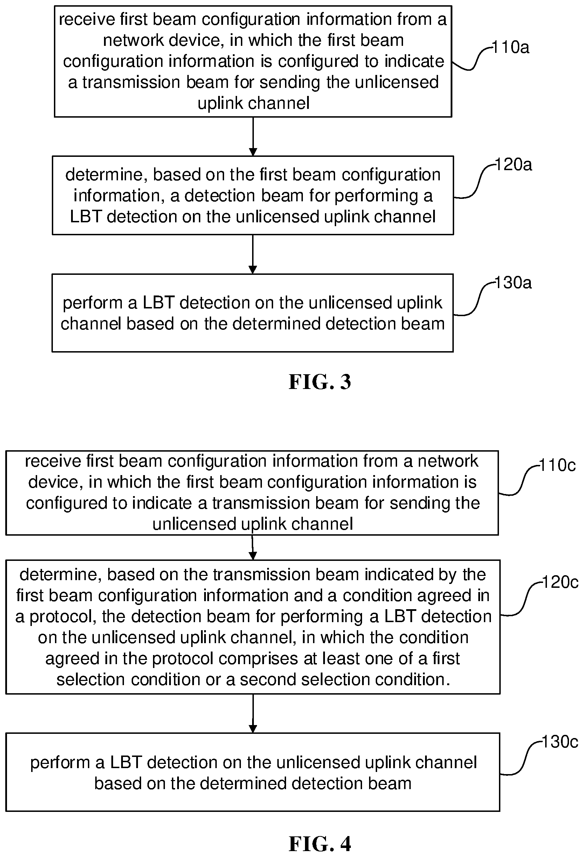

The method for determining a detection beam for an unlicensed uplink channel according to embodiments of the disclosure may be performed by the UE 101. FIG. 3 is a flowchart illustrating a method for determining a detection beam for an unlicensed uplink channel according to an embodiment. As illustrated in FIG. 3, the method includes the following.

### The method includes:

block S110a where first beam configuration information is received from a network device, in which the first beam configuration information is configured to indicate transmission beam(s) for sending the unlicensed uplink channel; and

block S120a where a detection beam for performing a LBT detection on the unlicensed uplink channel is determined based on the first beam configuration information.

In some examples, the method further includes a block s130a where in response to determining the detection beam for performing the LBT detection on the unlicensed uplink channel, the LBT detection is performed on the unlicensed uplink channel based on the determined detection beam.

The detection beam for performing the LBT detection on the unlicensed uplink channel is a detection beam for performing a directional LBT detection on the unlicensed uplink channel.

In some possible implementations, the detection beam for performing the LBT detection on the unlicensed uplink channel is an omni-directional beam.

In some possible implementations, the unlicensed uplink channel is a PUCCH, a CG-PUSCH, or a PUSCH.

In embodiments of the disclosure, the UE receives the first beam configuration information from the network device and determines, based on the first beam configuration information, the transmission beam for sending the unlicensed uplink channel and the UE determines, based on the transmission beam, the detection beam for performing the LBT detection on the unlicensed uplink channel. Therefore, the UE may determine a proper detection beam without the need for the network device to indicate relevant information of the detection beam, thereby saving transmission resources.

The method for determining a detection beam for an unlicensed uplink channel according to embodiments of the disclosure may be performed by the UE 101. The method includes the following.

At block S110b, a high-layer signaling is received from the network device, in which the high-layer signaling includes LBT configuration information, and the LBT configuration information indicates that a LBT mode is a directional LBT.

### At block S120b, first beam configuration information is received from the network device.

At block S130b, a detection beam for performing a LBT detection on the unlicensed uplink channel is determined based on the first beam configuration information.

In some examples, the method further includes a block s140b where in response to determining the detection beam for performing the LBT detection on the unlicensed uplink channel, the UE 101 performs the LBT detection on the unlicensed uplink channel based on the determined detection beam.

Once the UE receives the high-layer signaling from the network device, the UE may determine, based on the LBT configuration information in the high-layer signaling, that the LBT mode is the directional LBT mode.

The first beam configuration information is configured to indicate transmission beam(s) for sending the unlicensed uplink channel. The UE receives the first beam configuration information from the network device, determines the transmission beam for sending the unlicensed uplink channel based on the first beam configuration information, and determines, based on the transmission beam, the detection beam for performing the LBT detection on the unlicensed uplink channel.

In embodiments of the disclosure, the UE receives the high-layer signaling and the first beam configuration information from the network device to determine the LBT mode and the detection beam and perform the LBT detection on the unlicensed uplink channel in a directional LBT mode using the detection beam. Therefore, the UE may determine a proper detection beam without the need for the network device to indicate relevant information of the detection beam, thereby saving transmission resources.

The method for determining a detection beam for an unlicensed uplink channel according to embodiments of the disclosure may be performed by the UE 101. FIG. 4 is a flowchart illustrating a method for determining a detection beam for an unlicensed uplink channel according to an embodiment. As illustrated in FIG. 4, the method includes the following.

At block S110c, first beam configuration information is received from a network device, in which the first beam configuration information is configured to indicate transmission beam (s) for sending the unlicensed uplink channel.

At block S120c, the detection beam for performing a LBT detection on the unlicensed uplink channel is determined based on the transmission beam(s) indicated by the first beam configuration information and a condition agreed in a protocol, in which the condition agreed in the protocol includes at least one of a first selection condition or a second selection condition.

At block S130c, the UE performs the LBT detection on the unlicensed uplink channel based on the determined detection beam.

In some possible implementations, the first selection condition at least includes:
the detection beam being the transmission beam;
a coverage direction of the detection beam and a coverage direction of the transmission beam satisfying a preset relation;
   or,
the detection beam being associated with the transmission beam.

In some possible implementations, the second selection condition at least includes:
a beamwidth at a preset attenuation degree being maximum;
   or,
a spatial relation information index being minimum.

In embodiments of the disclosure, the condition may be agreed upon in the protocol. After determining the transmission beam for sending the unlicensed uplink channel, the UE may determine the detection beam for this unlicensed uplink channel based on the condition agreed upon in the protocol, and performs the LBT detection for this unlicensed uplink channel using the detection beam.

The method for determining a detection beam for an unlicensed uplink channel according to embodiments of the disclosure may be performed by the UE 101. The method includes the following.

At block S110d, first beam configuration information is received from a network device, in which the first beam configuration information is configured to indicate transmission beam (s) for sending the unlicensed uplink channel.

At block S120d, the detection beam for performing a LBT detection on the unlicensed uplink channel is determined based on the transmission beam(s) indicated by the first beam configuration information and a first selection condition agreed in a protocol.

In some examples, the method further includes a block S130d where in response to determining the detection beam for performing the LBT detection on the unlicensed uplink channel, the UE performs the LBT detection on the unlicensed uplink channel based on the determined detection beam.

In some possible implementations, the first selection condition at least includes:
the detection beam(s) being the transmission beam(s);
a coverage direction of each detection beam and a coverage direction of the transmission beam(s) satisfying a preset relation;
   or,
the detection beam(s) being associated with the transmission beam(s).

The following examples are provided for explanation.

### Example 1

The first selection condition is condition 1, i.e., "the detection beam (s) being the transmission beam(s)" and the UE determines, based on the first beam configuration information, that the beam A is the transmission beam. In this example, the UE may directly determine, based on the condition 1, that the beam A is the detection beam and performs the LBT detection using the beam A.

### Example 2

The first selection condition is condition 2, i.e., "a coverage direction of each detection beam and a coverage direction of the transmission beam(s) satisfying a preset relation", the preset relation is that the 3dB beamwidth of the transmission beam is within the 3dB beamwidth of each detection beam, the UE determines, based on the first beam configuration information, that the transmission beams of the unlicensed uplink channel include the beam A, the beam B, and the beam C, and the beam that satisfies the preset relation is the beam A based on the condition 2. In this example, the beam A is determined as the detection beam and the LBT detection is performed using the beam A.

### Example 3

The first selection condition is condition 3, i.e., "the detection beam(s) being associated with the transmission beam(s)", and the base station associates 3 beams with the transmission beam of the unlicensed uplink channel, i.e., the beam E, the beam F and the beam G. In this example, the UE determines the transmission beam of the unlicensed uplink channel based on the first beam configuration information and determines, based on the condition 3, that beams satisfying the preset relation are the beam E, the beam F and the beam G.

In embodiments of the disclosure, the first selection condition may be agreed upon in the protocol. After determining the transmission beam of the unlicensed uplink channel, the UE may determine the detection beam(s) of the unlicensed uplink channel based on the first selection condition, and performs the LBT detection for the unlicensed uplink channel using such detection beam(s).

The method for determining a detection beam for an unlicensed uplink channel according to embodiments of the disclosure may be performed by the UE 101. The method includes the following.

At block S110e, first beam configuration information is received from a network device, in which the first beam configuration information is configured to indicate transmission beam (s) for sending the unlicensed uplink channel.

At block S120e, a detection beam for performing a LBT detection on the unlicensed uplink channel is determined based on the transmission beam(s) indicated by the first beam configuration information and a second selection condition agreed in a protocol.

In some examples, the method further includes a block S130e where in response to determining the detection beam for performing the LBT detection on the unlicensed uplink channel, the UE performs the LBT detection on the unlicensed uplink channel based on the determined detection beam.

In some possible implementations, the second selection condition at least includes:
a beamwidth at a preset attenuation degree being maximum;
   or,
a spatial relation information index being minimum.

The following examples are provided for explanation.

### Example 1

The first selection condition is condition 4, i.e., "a beamwidth at a preset attenuation degree being maximum", the UE determines, based on the first beam configuration information that the transmission beams are the beam A and the beam B and determines, based on the condition 4, that the beam with the largest beamwidth at the preset attenuation degree between the beam A and the beam B is the beam A. In this example, the beam A is determined as the detection beam for performing the LBT detection.

### Example 2

The first selection condition is condition 5, i.e., "a spatial relation information index being minimum", the UE determines, based on the first beam configuration information, that the transmission beams are the beam A and the beam B and determines, based on the condition 5, that a beam with the minimum spatial relation information index between the beam A and the beam B is the beam B. In this example, the beam B is determined as the detection beam and the LBT detection is performed using the beam B.

In embodiments of the disclosure, the second selection condition may be agreed upon in the protocol. After determining the transmission beam of the unlicensed uplink channel, the UE may determine the detection beam of the unlicensed uplink channel based on the second selection condition, and performs the LBT detection on the unlicensed uplink channel using such detection beam. Certainly, it is understandable that in above examples, the second selection condition is based on a selection result of the first selection condition. However, the second selection condition may not be dependent on the first selection condition. That is, a plurality of detection beams may be determined as a set of candidate detection beams by other means, and a detection beam may be selected from the set based on the second selection condition.

The method for determining a detection beam for an unlicensed uplink channel according to embodiments of the disclosure may be performed by the UE 101. The method includes the following.

At block S110c, first beam configuration information is received from a network device, in which the first beam configuration information is configured to indicate transmission beam(s) for sending the unlicensed uplink channel.

At block S120c, the detection beam for performing the LBT detection on the unlicensed uplink channel is determined based on the transmission beam(s) indicated by the first beam configuration information and a first selection condition and a second selection condition agreed in a protocol.

At block S130c, the UE performs the LBT detection of the unlicensed uplink channel based on the determined detection beam.

In some possible implementations,
the first selection condition at least includes:
the detection beam(s) being the transmission beam(s);
a coverage direction of each detection beam and a coverage direction of the transmission beam(s) satisfying a preset relation;
   or,
the detection beam(s) being associated with the transmission beam(s).

In some possible implementations, the second selection condition at least includes:
a beamwidth at a preset attenuation degree being maximum;
   or,
a spatial relation information index being minimum.

The following example is provided for explanation.

### For example

The first selection condition is condition 3, i.e., "the detection beam(s) being associated with the transmission beam(s)", and the second selection condition is condition 5, i.e., "a beamwidth at a preset attenuation degree being maximum".

The UE determines, based on the first beam configuration information, that the transmission beams are the beam A and the beam B. The UE determines that a beam satisfying both the conditions 4 and 5 between the beam A and the beam B is the beam A. In this example, the UE determines that the detection beam is the beam A and performs the LBT detection using the beam A.

In embodiments of the disclosure, two conditions may be agreed upon in the protocol, i.e., the first selection condition and the second selection condition. After determining the transmission beam (s) for the unlicensed uplink channel, the UE may determine the detection beam(s) for the unlicensed uplink channel based on at least one of these two conditions, and perform the LBT detection on the unlicensed uplink channel using the detection beam(s).

The method for determining a detection beam for an unlicensed uplink channel according to an embodiment of the disclosure may be performed by the UE 101. The method includes the following.

At block S110d, first beam configuration information is received from a network device, in which the first beam configuration information is configured to indicate transmission beam (s) for sending the unlicensed uplink channel.

At block S120d, one or more detection beams are determined based on the transmission beam(s) indicated by the first beam configuration information and a first selection condition agreed in a protocol.

At block S130d, one of the one or more detection beams is determined as the detection beam for performing the LBT detection on the unlicensed uplink channel based on a second selection condition.

At block S140d, the UE performs the LBT detection on the unlicensed uplink channel based on the determined detection beam.

In some possible implementations, the first selection condition at least includes:
the detection beam(s) being the transmission beam(s);
a coverage direction of each detection beam and a coverage direction of the transmission beam(s) satisfying a preset relation;
   or,
the detection beam(s) being associated with the transmission beam(s).

In some possible implementations, the second selection condition at least includes: a beamwidth at a preset attenuation degree being maximum;
or,
a spatial relation information index being minimum.

The following 4 examples are provided for explanation.

### Example 1

The first selection condition is condition 1, the preset relation is that the 3dB beamwidth of the transmission beam is within the 3dB beamwidth of the detection beam and the second selection condition is condition 4.

After determining the transmission beam(s) of the unlicensed uplink channel based on the first beam configuration information, the UE determines, based on the condition 1, that beams satisfying the preset relation are the beam A, the beam B, and the beam C, and the beam having the largest 3dB beamwidth among the beam A, the beam B and the beam C is the beam A.

In this example, the UE may determine, based on the condition 4, that the detection beam for the unlicensed uplink channel is the beam A and use the beam A for performing the LBT detection on the unlicensed uplink channel.

### Example 2

The first selection condition is condition 2, the preset relation is that the 3dB beamwidth of the transmission beam is within the 3dB beamwidth of the detection beam, and the second selection condition is condition 5.

After determining, based on the first beam configuration information, the transmission beam(s) for sending the unlicensed uplink channel, the UE determines, based on the condition 2, that beams satisfying the preset relation are the beam A, the beam B, and the beam C. The beam with the minimum spatial relation information index among the beam A, the beam B and the beam C is the beam B.

In this example, the UE may determine, based on the condition 5, that the detection beam for the unlicensed uplink channel is the beam B and use the beam B for performing the LBT detection on the unlicensed uplink channel.

### Example 3

The first selection condition is condition 3, 3 beams are associated with the transmission beam(s) for sending the unlicensed uplink channel, i.e., the beam A, the beam B and the beam C, and the second selection condition is condition 4 where the preset attenuation degree is 3dB.

After determining, based on the first beam configuration information, the transmission beam(s) for sending the unlicensed uplink channel, the UE determines, based on the condition 3, that beams associated with the transmission beam(s) are the beam A, the beam B, and the beam C. In addition, a beam having the largest 3dB bandwidth among the beam A, the beam B and the beam C is the beam A.

In this example, the UE may determine, based on the condition 4, that the detection beam for the unlicensed uplink channel is the beam A and use the beam A for performing the LBT detection on the unlicensed uplink channel.

### Example 4

The first selection condition is condition 3, 3 beams are associated with the transmission beam(s) for sending the unlicensed uplink channel, i.e., the beam A, the beam B and the beam C, and the second selection condition is condition 5.

After determining, based on the first beam configuration information, the transmission beam(s) for the unlicensed uplink channel, the UE determines, based on the condition 3, that beams associated with the transmission beam(s) are the beam A, the beam B, and the beam C. In addition, a beam with the minimum spatial relation information index among the beam A, the beam B and the beam C is the beam B.

In this example, the UE may determine, based on the condition 5, that the detection beam for the unlicensed uplink channel is the beam B, and use beam B for performing the LBT detection on the unlicensed uplink channel.

In embodiments of the disclosure, the first selection condition and the second selection condition may be set. After determining the transmission beam(s) for sending the unlicensed uplink channel, the UE may determine the detection beam for the unlicensed uplink channel based on the first selection condition and the second selection condition in turn, and perform the LBT detection on the unlicensed uplink channel using the detection beam.

The method for determining a detection beam for an unlicensed uplink channel according to embodiments of the disclosure may be performed by the network device 102. The method includes the following.

At block S210a, the network device 102 sends first beam configuration information to a UE, in which the first beam configuration information is configured to indicate transmission beam(s) for sending the unlicensed uplink channel, to enable the UE to determine, based on the first beam configuration information, a detection beam for performing a LBT detection on the unlicensed uplink channel.

In embodiments of the disclosure, the network device sends the first beam configuration information to the UE, so that the UE determines the transmission beam(s) for sending the unlicensed uplink channel and determines, based on the transmission beam(s), the detection beam for performing the LBT detection on the unlicensed uplink channel. Therefore, the UE may accurately determine the detection beam based on an indication from the network device.

The method for determining a detection beam for an unlicensed uplink channel according to embodiments of the disclosure may be performed by the network device 102. The method includes the following.

At block S210b, a high-layer signaling is sent to the UE, in which the high-layer signaling includes LBT configuration information, and the LBT configuration information indicates that a LBT mode is a directional LBT.

At block S220b, first beam configuration information is sent to the UE, in which the first beam configuration information is configured to indicate transmission beam(s) for sending the unlicensed uplink channel, to enable the UE to determine, based on the first beam configuration information, the detection beam for performing the LBT detection on the unlicensed uplink channel.

After the network device sends the high-layer signaling to the UE, the UE may determine to perform the LBT detection in the directional LBT mode based on the LBT configuration information in the high-layer signaling.

After the network device sends the first beam configuration information to the UE, the UE may determine the transmission beam(s) for sending the unlicensed uplink channel based on the first beam configuration information, and determine, based on the transmission beam(s), the detection beam for performing the LBT detection on the unlicensed uplink channel.

In embodiments of the disclosure, the network device sends the high-layer signaling and the first beam configuration information to the UE, so that the UE may determine the LBT mode and the detection beam. Therefore, the UE may accurately determine the detection beam based on an indication from the network device.

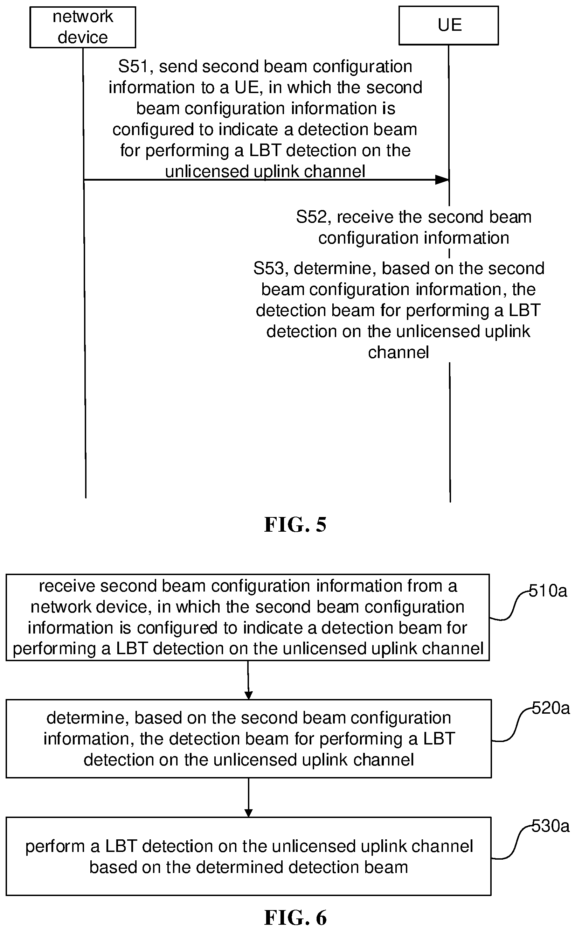

The method for determining a detection beam of an unlicensed uplink channel according to embodiments of the disclosure may be applied to the wireless communication system 100. FIG. 5 is a flowchart illustrating a method for determining a detection beam for an unlicensed uplink channel according to an embodiment. As illustrated in FIG. 5, the method includes the following.

At block S51, the network device 102 sends second beam configuration information to the UE 101, in which the second beam configuration information is configured to indicate a detection beam for performing a LBT detection on the unlicensed uplink channel.

At block S52, the UE 101 receives the second beam configuration information from the network device 102.

At block S53, the UE 101 determines, based on the second beam configuration information, a detection beam for performing the LBT detection on the unlicensed uplink channel.

In some examples, the method further includes a block S44 where in response to determining the detection beam for performing the LBT detection on the unlicensed uplink channel, the UE 101 performs the LBT detection on the unlicensed uplink channel based on the determined detection beam.

In embodiments of the disclosure, the network device sends the second beam configuration information to the UE, to enable to UE to determine, based on the second beam configuration information, the detection beam for performing the LBT detection on the unlicensed uplink channel. Therefore, the UE may accurately determine the detection beam based on an indication from the network device.

The method for determining a detection beam for an unlicensed uplink channel according to embodiments of the disclosure may be performed by the UE 101. FIG. 6 is a flowchart illustrating a method for determining a detection beam for an unlicensed uplink channel according to an embodiment. As illustrated in FIG. 6, the method includes the following.

At block S510a, second beam configuration information is received from the network device, in which the second beam configuration information is configured to indicate a detection beam for performing a LBT detection on the unlicensed uplink channel.

At block S520a, a detection beam for performing the LBT detection on the unlicensed uplink channel is determined based on the second beam configuration information.

In some example, the method further includes a block S530a where in response to determining the detection beam for performing the LBT detection on the unlicensed uplink channel, the LBT detection is performed on the unlicensed uplink channel based on the determined detection beam.

In some possible implementations, the unlicensed uplink channel is a PUCCH, a CG-PUSCH, or a PUSCH.

In embodiments of the disclosure, the UE receives the second beam configuration information from the network device and determines, based on the second beam configuration information, the detection beam for performing the LBT detection on the unlicensed uplink channel, such that that the UE may accurately determine the detection beam based on the indication from the network device.

The method for determining a detection beam for an unlicensed uplink channel according to embodiments of the disclosure may be performed by the UE 101. The method includes the following.

At block S510b, a high-layer signaling is received from a network device, in which the high-layer signaling includes second beam configuration information, and the second beam configuration information is configured to indicate a detection beam for performing a LBT detection on an unlicensed uplink channel.

At block S520b, the detection beam for performing the LBT detection on the unlicensed uplink channel is determined based on the second beam configuration information.

In some examples, the method further includes a block S530b where in response to determining the detection beam for performing the LBT detection on the unlicensed uplink channel, the LBT detection is performed on the unlicensed uplink channel based on the determined detection beam.

In some possible implementations, the unlicensed uplink channel is a PUCCH or a CG-PUSCH.

In embodiments of the disclosure, the UE receives the second beam configuration information from the network device through the high-layer signaling, and determines, based on the second beam configuration information, the detection beam for performing the LBT detection on the unlicensed uplink channel. Therefore, the UE may accurately determine the detection beam based on the indication from the network device.

The method for determining a detection beam for an unlicensed uplink channel according to embodiments of the disclosure may be performed by the UE 101. The method includes the following.

At block S510c, second beam configuration information is received from a network device, in which the second beam configuration information includes multiple pieces of spatial relation information and the multiple pieces of spatial relation information correspond to a plurality of uplink beams.

At block S520c, a MAC CE signaling is received from the network device, in which the MAC CE signaling is configured to activate one of the plurality of uplink beams.

At step S530c, the activated beam in the multiple pieces of spatial relation information is determined as the detection beam for performing the LBT detection on the unlicensed uplink channel.

In some examples, the method further includes a block S540c where in response to determining the detection beam for performing the LBT detection on the unlicensed uplink channel, the LBT detection is performed on the unlicensed uplink channel based on the determined detection beam.

The following 2 examples are provided for explanation. Example 1

For a PUCCH, the UE may receive the second beam configuration information from the network device. The second beam configuration information includes multiple pieces of spatial relation information (spatialrelationinfo) and the multiple pieces of spatial relation information correspond to the plurality of uplink beams. That is, the multiple pieces of spatial relation information are used to indicate SRS transmission beams.

The UE may receive the MAC CE signaling from the network device. The MAC CE signaling is used for activating one of the uplink beams. The activated beam may be used as the detection beam for performing the LBT detection on the unlicensed PUCCH, and the LBT detection may be performed on the PUCCH using this detection beam.

### Example 2

For a CG-PUSCH, the UE may receive the second beam configuration information from the network device. The second beam configuration information includes multiple pieces of spatial relation information and the multiple pieces of spatial relation information correspond to the plurality of uplink beams. That is, the multiple pieces of spatial relation information are used for indicating SRS transmission beams.

The UE may receive the MAC CE signaling from the network device, and the MAC CE signaling is used for activating one of the uplink beams. The activated beam may be used as the detection beam for performing the LBT detection on the unlicensed CG-PUSCH.

In embodiments of the disclosure, the UE determines the detection beam through the MAC CE signaling, such that the UE accurately determines the detection beam based on the indication from the network device.

The method for determining a detection beam for an unlicensed uplink channel according to embodiments of the disclosure may be performed by the UE 101. The method includes the following.

At block S510d, a RRC signaling is received from a network device, in which the RRC signaling includes second beam configuration information, and the second beam configuration information is configured to indicate one SRS resource to indicate a detection beam for performing the LBT on an unlicensed uplink channel.

The following 2 examples are provided for explanation.

### Example 1

For a CG-PUSCH, the UE may receive the RRC signaling from the network device. The RRC signaling includes the second beam configuration information. The second beam configuration information indicates the SRS resource to implicitly indicate the detection beam corresponding to the unlicensed CG-PUSCH. Once the UE receives the RRC signaling, the UE may determine, based on the second beam configuration information in the RRC signaling, the detection beam corresponding to the unlicensed CG-PUSCH.

### Example 2

For a PUCCH, the UE may receive the RRC signaling from the network device. The RRC signaling includes the second beam configuration information. The second beam configuration information indicates the SRS resource to implicitly indicate the detection beam corresponding to the unlicensed PUCCH. Once the UE receives the RRC signaling, the UE may determine, based on the second beam configuration information in the RRC signaling, the detection beam corresponding to the unlicensed PUCCH.

In embodiments of the disclosure, the UE receives the second beam configuration information from the network device through the RRC signaling, and determines the detection beam based on the second beam configuration information, such that the UE accurately determines the detection beam based on the indication from the network device.

The method for determining a detection beam for an unlicensed uplink channel according to embodiments of the disclosure may be performed by the UE 101. In the method, the second beam configuration information is scheduling DCI. The method includes the following.

At block S510e, scheduling DCI is received from a network device, in which the scheduling DCI includes second beam configuration information, and the second beam configuration information is configured to indicate one SRS resource to indicate the detection beam for performing the LBT detection on the unlicensed uplink channel.

At block S520e, the detection beam for performing the LBT detection on the unlicensed uplink channels is determined based on the scheduling DCI.

In some example, the method further includes a block S330e where in response to determining the detection beam for performing the LBT detection on the unlicensed uplink channel, the LBT detection is performed on the unlicensed uplink channel based on the determined detection beam.

In a possible example, with respect to the dynamically scheduled PUSCH, the UE may receive the scheduling DCI from the network device. The scheduling DCI includes the second beam configuration information. The second beam configuration information indicates one SRS resource to indicate a detection beam. The detection beam is determined as the detection beam for performing the LBT detection on the unlicensed uplink channel.

In embodiments of the disclosure, the scheduling DCI is used as the second beam configuration information. The UE receives the scheduling DCI from the network device and determines the detection beam based on the scheduling DCI, so that the UE accurately determines the detection beam based on the indication from the network device.

The method for determining a detection beam for an unlicensed uplink channel according to embodiments of the disclosure may be performed by the UE 101. The method includes the following.

At block S510f, in response to not receiving the second beam configuration information from the network device, a default detection beam is determined for performing the LBT detection on the unlicensed uplink channel.

The default detection beam may be the transmission beam for sending the unlicensed uplink channel.

In embodiments of the disclosure, the default detection beam may be set. In response to not receiving the second beam configuration information from the network device, the UE may accurately determine the detection beam based on the indication from the network device.

The method for determining a detection beam for an unlicensed uplink channel according to embodiments of the disclosure may be performed by the UE 101. The method includes the following.

At block S500g, first beam configuration information is received from a network device, in which the first beam configuration information is configured to indicate transmission beam (s) for sending the unlicensed uplink channel.

At block S510g, in response to not receiving second beam configuration information from the network device, a default detection bema is determined for performing the LBT detection on the unlicensed uplink channel.

The default detection beam may be the transmission beam(s) for sending the unlicensed uplink channel. The UE may know the default detection beam after determining, based on the first beam configuration information, the transmission beam(s) for sending the unlicensed uplink channel.

In embodiments of the disclosure, a default detection beam may be set. In response to not receiving the second beam configuration information from the network device, the UE may accurately determine the detection beam based on the indication from the network device.

The method for determining a detection beam for an unlicensed uplink channel according to embodiments of the disclosure may be performed by the UE 101. The method includes the following.

At block S510h, in response to not receiving the second beam configuration information from the network device, determining a default detection beam for performing the LBT detection on the unlicensed uplink channel.

The default detection beam may be an omni-directional beam.

In embodiments of the disclosure, a default detection beam may be set. In response to not receiving the second beam configuration information from the network device, the UE may determine the detection beam based on the indication from the network device.

The method for determining a detection beam for an unlicensed uplink channel according to embodiments of the disclosure may be performed by the network device 102. The method includes the following.

At block S410a, second beam configuration information is sent to a UE, in which the second beam configuration information is configured to indicate a detection beam for performing the LBT detection on the unlicensed uplink channel, to enable the UE to determine, based on the second beam configuration information, the detection beam for performing the LBT detection on the unlicensed uplink channel.

In some possible implementations, the unlicensed uplink channel is a PUCCH, a CG-PUSCH, or a PUSCH.

In embodiments of the disclosure, the network device sends the second beam configuration information to the UE, to enable the UE to determine the detection beam for performing the LBT detection on the unlicensed uplink channel. Therefore, the UE may accurately determine the detection beam based on the indication from the network device.

The method for determining a detection beam for an unlicensed uplink channel according to embodiments of the disclosure may be performed by the network device 102. The method includes the following.

At block S410b, a high-layer signaling is sent to a UE, in which the high-layer signaling includes second beam configuration information, and the second beam configuration information is configured to indicate a detection beam for performing the LBT detection on the unlicensed uplink channel, to enable the UE to determine, based on the second beam configuration information, the detection beam for performing the LBT detection on the unlicensed uplink channel.

In some possible implementations, the unlicensed uplink channel is a PUCCH or a CG-PUSCH.

In embodiments of the disclosure, the network device sends the second beam configuration information to the UE through the high-layer signaling, to enable the UE to determine, based on the second beam configuration information, the detection beam for performing the LBT detection on the unlicensed uplink channel. Therefore, the UE accurately determines the detection beam based on the indication from the network device.

The method for determining a detection beam for an unlicensed uplink channel according to embodiments of the disclosure may be performed by the network device 102. The method includes the following.

At block S410c, second beam configuration information is sent to a UE, in which the second beam configuration information includes multiple pieces of spatial relation information and the multiple pieces of spatial relation information correspond to a plurality of uplink beams. The MAC CE signaling is used for activating one of the plurality of uplink beams.

At block S420c, a MAC CE signaling is sent to the UE, in which the MAC CE signaling is used for activating one of the plurality of uplink beams, to enable the UE to determine the activated beam in the pieces of spatial relation information as the detection beam for performing the LBT detection on the unlicensed uplink channel.

In some possible implementations, the unlicensed uplink channel is a PUCCH or a CG-PUSCH.

In embodiments of the disclosure, the network device sends the MAC CE signaling to the UE, to enable the UE to determine the detection beam. Therefore, the UE may accurately determine the detection beam based on the indication from the network device.

The method for determining a detection beam for an unlicensed uplink channel according to embodiments of the disclosure may be performed by the network device 102. The method includes the following.

At block S410d, a RRC signaling is sent to the UE, in which the RRC signaling includes the second beam configuration information, and the second beam configuration information is configured to indicate one SRS resource to indicate the detection beam for performing the LBT detection on the unlicensed uplink channel, to enable the UE to determine, based on the second beam configuration information, the detection beam for performing the LBT detection on the unlicensed uplink channel, and perform the LBT detection on the unlicensed uplink channel using the determined detection beam.

In some possible implementations, the unlicensed uplink channel is a PUCCH or a CG-PUSCH.

In embodiments of the disclosure, the network device sends the second beam configuration information to the UE through the RRC signaling, to enable the UE to determine the detection beam based on the second beam configuration information. Therefore, the UE accurately determines the detection beam based on the indication from the network device.

The method for determining a detection beam for an unlicensed uplink channel according to embodiments of the disclosure may be performed by the network device 102. The method includes the following.

At block S410e, scheduling DCI is sent to the UE, in which the scheduling DCI includes the second beam configuration information, and the second beam configuration information is configured to indicate one SRS resource to indicate the detection beam for performing the LBT detection on the unlicensed uplink channel, to enable the UE to determine, based on the second beam configuration information, a detection beam for performing the LBT detection on an unlicensed uplink channel and perform the LBT detection on the unlicensed uplink channel using the determined detection beam.

In some possible implementations, the unlicensed uplink channel is a PUSCH.

In embodiments of the disclosure, the network device sends the scheduling DCI to the UE, to enable the UE to determine the detection beam based on the scheduling DCI. Therefore, the UE accurately determines the detection beam based on the indication from the network device.

Based on the same idea as above method embodiments, embodiments of the disclosure also provide a communication device that may have functions of the UE in above method embodiments and may be used to perform steps executed by the UE according to above method embodiments. The functions may be realized by hardware, software or hardware for executing corresponding software. The hardware or software includes one or more modules corresponding to above-described functions.

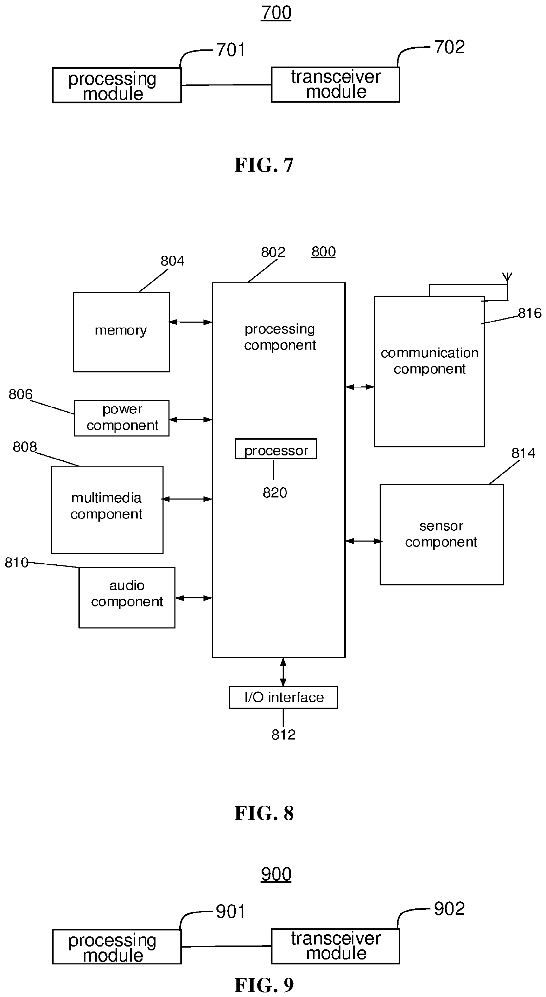

In a possible implementation, the communication apparatus 700 illustrated in FIG. 7 may serve as the UE involved in above method embodiments, and perform the steps executed by the UE in above method embodiments. As illustrated in FIG. 7, the communication apparatus 700 may include a transceiver module 701 and a processing module 702. The transceiver module 701 and the processing module 702 are coupled to each other. The transceiver module 701 is configured to support the communication apparatus 700 to communicate. The transceiver module 701 may have wireless communication functions. For example, the transceiver module 701 may perform wireless communication with other communication devices through a radio interface. The processing module 702 is configured to support the communication apparatus 700 to perform the processing operations in above method embodiments, which include but are not limited to: generating information/messages sent by the transceiver module 701, and/or, demodulating and decoding signals received by the transceiver module 701.

In an example, in performing the steps implemented by the UE, the transceiver module 701 is used to: receive first beam configuration information from a network device, in which the first beam configuration information is configured to indicate a transmission beam for sending the unlicensed uplink channel. The processing module 702 is configured to determine, based on the first beam configuration information, a detection beam for performing the LBT detection on the unlicensed uplink channel. In another example, in performing the steps implemented by the UE, the transceiver module 701 is configured to receive second beam configuration information from a network device, in which the second beam configuration information is configured to indicate a detection beam for performing the LBT detection on the unlicensed uplink channel. The processing module 702 is configured to determine, based on the second beam configuration information, the detection beam for performing the LBT detection on the unlicensed uplink channel.

When the communication device is a UE, its structure may be illustrated in FIG. 8. The device 800 may be a mobile phone, a computer, a digital broadcasting terminal, a message transceiver device, a game console, a tablet device, a medical device, a fitness device and a personal digital assistant.

As illustrated in FIG. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone call, data communication, camera operation, and recording operation. The processing component 802 may include one or more processors 820 to perform instructions to implement all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the device 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the device 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of a user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 4G or 5G, or a combination thereof. In an exemplary embodiment, the communication component 816 receives a broadcast signal from an external broadcast management system or broadcast associated information via a broadcast channel. In an exemplary embodiment, the communication component 816 further includes a Near Field Communication (NFC) module to facilitate short-range communication. For example, the NFC module may be implemented based on a radio-frequency identification (RFID) technology, an Infrared Data Association (IrDA) technology, an Ultra-Wide Band (UWB) technology, a Blue Tooth (BT) technology, and other technologies.

In some embodiments, the device 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing above described methods.

In some embodiment, a non-transitory computer-readable storage medium including instructions is provided, e.g., the memory 804 including instructions. When the instructions are executed by the processor 820 of the device 800, the above methods are implemented. For example, the non-transitory computer-readable storage medium may be a ROM, a random access memory (RAM), a CD-ROM, a magnetic tape, a floppy disk and an optical data storage device.

Based on the same concept as the above method embodiments, embodiments of the disclosure also provide a communication device, which may have the functions of the network device in above method embodiments, and may be used to perform the steps executed by the network device in above method embodiments. The functions may be implemented by hardware, software or hardware executing corresponding software. The hardware or software includes one or more modules corresponding to the above functions.

In a possible implementation, the communication apparatus 900 illustrated in FIG. 9 may serve as the network device involved in above method embodiments, and perform the steps executed by the network device in above method embodiments. As illustrated in FIG. 9, the communication apparatus 900 may include a transceiver module 901 and a processing module 902. The transceiver module 901 and the processing module 902 are coupled to each other. The transceiver module 901 is configured to support the communication apparatus 900 to communicate. The transceiver module 901 may have wireless communication functions. For example, the transceiver module 901 may perform wireless communication with other communication devices through a radio interface. The processing module 902 is configured to support the communication apparatus 900 to perform the processing operations in above method embodiments, which include but are not limited to: generating information/messages sent by the transceiver module 901, and/or, demodulating and decoding signals received by the transceiver module 901.

In an example, in performing the steps implemented by the network device, the transceiver module 901 is used to send first beam configuration information to a UE, in which the first beam configuration information is configured to indicate a transmission beam for sending the unlicensed uplink channel, to enable the UE to determine, based on the first beam configuration information, the detection beam for performing the LBT detection on the unlicensed uplink channel.

In an example, in performing the steps implemented by the network device, the transceiver module 901 is used to send second beam configuration information to a UE, in which the second beam configuration information is configured to indicate a detection beam for performing the LBT detection on the unlicensed uplink channel, to enable the UE to determine, based on the second beam configuration information, the detection beam for performing the LBT detection on the unlicensed uplink channel.

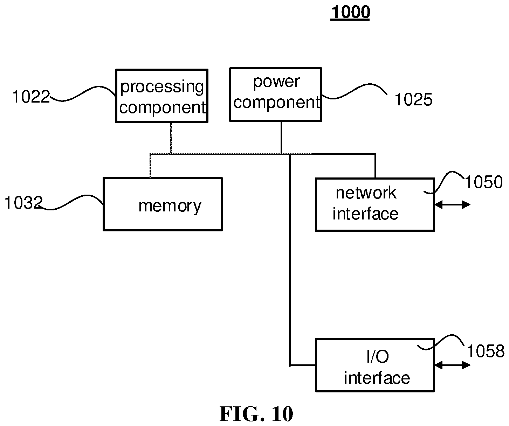

When the communication apparatus is a network device, its structure may also be illustrated in FIG. 10. The structure of the communication apparatus is illustrated by taking a base station as an example. As illustrated in FIG. 10, the device 1000 includes a memory 1001, a processor 1002, a transceiver component 1003, and a power component 1006. The memory 1001 is coupled with the processor 1002 and may be used for storing a program and data necessary for the communication device 1000 to implement functions. The processor 1002 is configured to support the communication device 1000 to perform corresponding functions of above methods, and the functions may be implemented by calling the program stored in the memory 1001. The transceiver component 1003 may be a wireless transceiver, which may be used to support the communication device 1000 to receive and send signaling and/or data through a radio interface. The transceiver component 1003 may also be called a transceiver unit or a communication unit. The transceiver component 1003 may include a radio frequency component 1004 and one or more antennas 1005. The radio frequency component 1004 may be a remote radio unit (RRU), which may be used for transmitting radio frequency signals and conversing radio frequency signals and baseband signals. The one or more antennas 1005 may be used for radiating and receiving radio frequency signals.

When the communication device 1000 needs to send data, the processor 1002 may perform baseband processing on the data to be sent, and transmit baseband signals to the RRU. The RRU performs radio frequency processing on the baseband signals and sends the radio frequency signals in the form of electromagnetic waves through the antenna. When data is sent to the communication device 1000, the RRU receives the radio frequency signals through the antenna, converts the radio frequency signals into the baseband signals, and sends the baseband signals to the processor 1002. The processor 1002 converts the baseband signals into data and processes the data.

In some embodiments, a non-transitory computer-readable storage medium including instructions is provided, e.g., the memory 1001 including instructions. When the instructions are executed by the processor 1002 of the device 1000, above methods are implemented. For example, the non-transitory computer-readable storage medium may be a ROM, a RAM, a CD-ROM, a magnetic tape, a floppy disk and an optical data storage device.

Other implementations of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples are considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

### INDUSTRIAL PRACTICALITY

The UE determines, based on the first beam configuration information or the second beam configuration information received from the network device, the detection beam for performing the LBT detection on the unlicensed uplink channel, so that the UE may determine a proper detection beam without the need for the network device to indicate relevant information of the detection beam, thereby saving transmission resources. Or, the UE may accurately determine the detection beam based on the indication from the network device.

## Claims

1. A method for determining a detection beam for an unlicensed uplink channel, performed by a user equipment, comprising:
receiving first beam configuration information from a network device, wherein the first beam configuration information is configured to indicate a transmission beam for sending the unlicensed uplink channel; and
determining, based on the first beam configuration information, a detection beam for performing a listen before talk (LBT) detection on the unlicensed uplink channel.

2. The method of claim 1, further comprising:
receiving a high-layer signaling from the network device, wherein the high-layer signaling comprises LBT configuration information, and the LBT configuration information indicates that a LBT mode is a directional LBT.

3. The method of claim 1, wherein determining, based on the first beam configuration information, the detection beam for performing the LBT detection on the unlicensed uplink channel comprises:
determining, based on the transmission beam indicated by the first beam configuration information and a condition agreed in a protocol, the detection beam for performing the LBT detection on the unlicensed uplink channel, wherein the condition agreed in the protocol comprises at least one of a first selection condition or a second selection condition.

4. The method of claim 1, wherein determining, based on the first beam configuration information, the detection beam for performing the LBT detection on the unlicensed uplink channel comprises:
determining one or more detection beams based on the transmission beam indicated by the first beam configuration information and a first selection condition agreed in a protocol; and/or
determining, based on a second selection condition agreed in the protocol, one of the one or more detection beams as the detection beam for performing the LBT detection on the unlicensed uplink channel.

5. The method of claim 3 or 4, wherein the first selection condition at least comprises:
the detection beam being the transmission beam;
a coverage direction of the detection beam and a coverage direction of the transmission beam satisfying a preset relation;
or,
the detection beam being associated with the transmission beam.

6. The method of claim 3 or 4, wherein the second selection condition at least comprises:
a beamwidth at a preset attenuation degree being maximum;
or,
a spatial relation information index being minimum.

7. The method of claim 1, wherein the detection beam for performing the LBT detection on the unlicensed uplink channel is an omni-directional beam.

8. A method for determining a detection beam for an unlicensed uplink channel, performed by a user equipment, comprising:
receiving second beam configuration information from a network device, wherein the second beam configuration information is configured to indicate a detection beam for performing a listen before talk (LBT) detection on the unlicensed uplink channel; and
determining, based on the second beam configuration information, the detection beam for performing the LBT detection on the unlicensed uplink channel.

9. The method of claim 8, wherein receiving the second beam configuration information from the network device comprises:
receiving a high-layer signaling from the network device, wherein the high-layer signaling comprises the second beam configuration information.

10. The method of claim 8, wherein the second beam configuration information comprises multiple pieces of spatial relation information and the multiple pieces of spatial relation information correspond to a plurality of uplink beams, and the method further comprises:
receiving a Medium Access Control Control Element (MAC CE) signaling from the network device, wherein the MAC CE signaling is configured to activate one of the plurality of uplink beams; and
determining an activated beam in the multiple pieces of spatial relation information as the detection beam for performing the LBT detection on the unlicensed uplink channel.

11. The method of claim 8, wherein receiving the second beam configuration information from the network device comprises:
receiving a Radio Resource Control (RRC) signaling from the network device, wherein the RRC signaling comprises the second beam configuration information;
wherein the second beam configuration information is configured to indicate one Sounding Reference Signal (SRS) resource to indicate the detection beam for performing the LBT detection on the unlicensed uplink channel.

12. The method of any one of claims 9 to 11, wherein the unlicensed uplink channel is a Physical Uplink Control Channel (PUCCH) or a Configured Grant Physical Uplink Shared Channel (CG-PUSCH).

13. The method of claim 8, wherein receiving the second beam configuration information from the network device comprises:
receiving scheduling downlink control information (DCI) from the network device, wherein the scheduling DCI comprises the second beam configuration information, and the second beam configuration information is configured to indicate one Sounding Reference Signal (SRS) resource to indicate the detection beam for performing the LBT detection on the unlicensed uplink channel.

14. The method of claim 13, wherein the unlicensed uplink channel is a Physical Uplink Shared Channel (PUSCH) or a Configured Grant Physical Uplink Shared Channel (CG-PUSCH).

15. The method of claim 8, further comprising:
in response to not receiving the second beam configuration information from the network device, determining a default detection beam for performing the LBT detection on the unlicensed uplink channel.

16. The method of claim 15, wherein the default detection beam is a transmission beam for sending the unlicensed uplink channel or an omni-directional beam.

17. A method for determining a detection beam for an unlicensed uplink channel, performed by a network device, comprising:
sending first beam configuration information to a user equipment, wherein the first beam configuration information is configured to indicate a transmission beam for sending the unlicensed uplink channel, to enable the user equipment to determine, based on the first beam configuration information, the detection beam for performing a listen before talk (LBT) detection on the unlicensed uplink channel.

18. The method of claim 17, further comprising:
sending a high-layer signaling to the user equipment, wherein the high-layer signaling comprises LBT configuration information, and the LBT configuration information indicates that a LBT mode is a directional LBT.

19. A method for determining a detection beam of an unlicensed uplink channel, performed by a network device, comprising:
sending second beam configuration information to a user equipment, wherein the second beam configuration information is configured to indicate a detection beam for performing a listen before talk (LBT) detection on the unlicensed uplink channel, to enable the user equipment to determine, based on the second beam configuration information, the detection beam for performing the LBT detection on the unlicensed uplink channel.

20. The method of claim 19, wherein sending the second beam configuration information to the user equipment comprises:
sending a high-layer signaling to the user equipment, wherein the high-layer signaling comprises the second beam configuration information.

21. The method of claim 19 or 20, wherein the second beam configuration information comprises multiple pieces of spatial relation information, and the multiple pieces of spatial relation information correspond to a plurality of uplink beams, and the method further comprises:
sending a Medium Access Control Control Element (MAC CE) signaling to the user equipment, wherein the MAC CE signaling is configured to activate one of the plurality of uplink beams, to enable the user equipment to determine an activated beam in the multiple pieces of spatial relation information as the detection beam for performing the LBT detection on the unlicensed uplink channel.

22. The method of claim 19, wherein sending the second beam configuration information to the user equipment comprises:
sending a Radio Resource Control (RRC) signaling to the user equipment, wherein the RRC signaling comprises the second beam configuration information, and the second beam configuration information is configured to indicate one SRS resource to indicate the detection beam for performing the LBT detection on the unlicensed uplink channel.

23. The method of claim 19, wherein sending the second beam configuration information to the user equipment comprises:
sending scheduling Downlink Control Information (DCI) to the user equipment, wherein the scheduling DCI comprises the second beam configuration information, and the second beam configuration information is configured to indicate one SRS resource to indicate the detection beam for performing the LBT detection on the unlicensed uplink channel.

24. A communication apparatus, comprising:
a transceiver module, configured to receive first beam configuration information from a network device, wherein the first beam configuration information is configured to indicate a transmission beam for sending an unlicensed uplink channel; and
a processing module, configured to determine, based on the first beam configuration information, a detection beam for performing a listen before talk (LBT) detection on the unlicensed uplink channel.

25. A communication apparatus, comprising:
a transceiver module, configured to receive second beam configuration information from a network device, wherein the second beam configuration information is configured to indicate a detection beam for performing a listen before talk (LBT) detection on the unlicensed uplink channel; and
a processing module, configured to determine, based on the second beam configuration information, the detection beam for performing the LBT detection on the unlicensed uplink channel.

26. A communication apparatus, comprising:
a transceiver module, configured to send first beam configuration information to a user equipment, wherein the first beam configuration information is configured to indicate a transmission beam for sending an unlicensed uplink channel, to enable the user equipment to determine, based on the first beam configuration information, the detection beam for performing a listen before talk (LBT) detection on the unlicensed uplink channel.

27. A communication apparatus, comprising:
a transceiver module, configured to send second beam configuration information to a user equipment, wherein the second beam configuration information is configured to indicate a detection beam for performing a listen before talk (LBT) detection on an unlicensed uplink channel, to enable the user equipment to determine, based on the second beam configuration information, the detection beam for performing the LBT detection on the unlicensed uplink channel.

28. A communication device, comprising:
a memory, configured to store a computer program; and
a processor, configured to execute the computer program to perform the method of any one of claims 1 to 7 or claims 8 to 16.

29. A communication device, comprising:
a memory, configured to store a computer program; and
a processor, configured to execute the computer program to perform the method of any one of claims 17 to 18 or claims 19 to 23.

30. A computer-readable storage medium having instructions stored thereon, wherein when the instructions are called and executed by a computer, the computer is caused to perform any one of claims 1 to 7 or claims 8 to 16.

31. A computer-readable storage medium having instructions stored thereon, wherein when the instructions are called and executed by a computer, the computer is caused to perform any one of claims 17 to 18 or claims 19 to 23.
